# EUROPEAN PATENT SPECIFICATION

(11) **EP 3 127 756 B1**
(45) Date of publication and mention of the grant of the patent: **28.09.2022**
(21) Application number: 16182836.3
(22) Date of filing: 04.08.2016
(51) Int. Cl.: B60R 21/013, B60C 23/04, B60C 23/00

(54) **IMPACT DETECTION DEVICE**
VORRICHTUNG ZUR AUFPRALLERKENNUNG
DISPOSITIF DE DÉTECTION D'IMPACT

(30) Priority: 07.08.2015 IT UB20152966
(43) Date of publication of application: 08.02.2017
(73) Proprietor: Dainese S.p.A., 36064 Colceresa (Vicenza) (IT)
(72) Inventor: Silani, Enrico, 21026 Gavirate (Varese) (IT); Ronco, Luigi, 36060 Molvena (Vicenza) (IT)
(74) Representative: Manfrin, Marta

(56) References cited:
- EP-A2- 1 281 949
- JP-A- 2008 310 764
- JP-A- 2009 205 225
- JP-A- 2010 173 416

## Description

The present invention relates in general to the detection of impacts in a two-wheeled vehicle, with particular reference to the sector of motorcycles. More particularly, the invention relates to the positioning of an impact detection device on a motorcycle designed to allow activation of an automatic impact protection system, such as an airbag worn by the rider of the motorcycle.

In the sector of motorcycles and in particular clothing for motorcyclists automatic impact protection systems generally associated with jackets and one-piece suits are becoming increasingly widespread. The automatic protection systems generally comprise a plurality of airbags which can be activated automatically in the event of an accident in order to protect the motorcyclist from falls and/or impact with other vehicles.

JP2010173416 A discloses a motorcycle with a wheel rim mounted tyre pressure sensor and a body mounted acceleration sensor. An airbag is controlled based on the tyre pressure and the acceleration signal.

JP2009205225 A shows a passenger car using a wheel mounted acceleration sensor to detect a hit and run situation, even when there is no witness.

At present automatic protection systems of the wireless type are increasingly more common, activation of the airbag being managed by a remote control unit which is located on a person and connected to an impact detection device comprising one or more accelerometers arranged on the motorcycle. The accelerometers of the detection device are able to detect the accelerations of the motorcycle during travel and in particular the negative accelerations which affect the vehicle in the event of an impact. The electric signals generated by the accelerometers are sent to the control unit which, when a predetermined deceleration threshold is exceeded, activates the airbags.

The impact detection device is, as mentioned, generally mounted on the motorcycle and in particular in the vicinity of the axis of the front wheel. This arrangement has hitherto been considered to be the most suitable for detecting the accelerations acting on the motorcycle and in particular the negative accelerations in the event of an accident.

One of the main problems of the automatic protection systems for a motorcycle is that of mounting and adapting impact detection devices to models of motorcycle which may be different from each other, and in particular that of positioning the impact detection device on the fork. In fact, the impact detection device must be mounted stably on the fork of the motorcycle. However, when arranged on the fork, the impact detection device is exposed to wear, to atmospheric agents and also to possible deterioration or damage which may occur due to the action of stones or grit scattered during the travel movement of the motorcycle or following washing of the motorcycle in a washing plant and/or a brushing action or strong water jet or similar action involving possible impact which may affect the impact detection device and which could adversely affect the detection efficiency.

Moreover, when arranged on the fork, the impact detection device may form a bulky element which may alter the aesthetic appearance thereof.

One technical problem forming the basis of the present invention is that of providing an impact protection device which is able to reduce to a minimum the disadvantages of mounting on a fork.

This is obtained by means of an impact detection device and by a method as defined in the respective independent claims. Secondary characteristic features forming the subject of the present invention are defined in the corresponding dependent claims.

Basically, in accordance with the present invention , an impact detection device is provided, said impact detection device including a TPMS, namely a so-called "Tyre Pressure Monitoring System" which, as is known, is a device usually used for monitoring the pressure of a tyre and which, according to the present invention, is suitably configured to be able to process data relating to an impact or other danger situation for a motorcycle, involving the wheel of the vehicle on which the TPMS is mounted.

In other words, a TPMS, namely an integrated tyre pressure control system, is used for monitoring impact or danger condition for a motorcycle user, wherein this condition may be signalled to a control unit located on a person in order to activate an airbag.

In particular, a TPMS is preferably a device which includes at least one pressure sensor or transducer, one or more acceleration sensors or transducers, preferably along two axes, a temperature sensor and a receiver (typically of the low frequency type) and a logic unit able to process signals from the transducers, as well as a transmitter able to transmit a signal processed by the logic unit, such as a signal relating to the condition monitored.

According to the present invention, the logic unit of the TPMS is suitably configured to allow the correlation, via mathematical operations, of the pressure and/or acceleration values detected by the respective sensors with impact conditions, such as an increase in pressure caused by a direct impact of the wheel of the motorcycle, in particular the front wheel, or generally other danger or accident conditions for a motorcycle, such as bursting of the tyre. According to the invention it is envisaged using only the acceleration data and ignoring the pressure data in order to establish a danger situation. It follows that, in accordance with the invention, only the data supplied by the one or more acceleration transducers are used and processed in order to emit a signal for activating inflation of the airbag.

Other transducers or sensors for detecting an impact may be dispensed with. Basically, the impact data is collected only by the TPMS, and preferably only by the accelerometers which are mounted on the TPMS or which form an integral part of the TPMS.

The main advantage of the present invention consists in the fact that a TPMS is provided inside the tyre and is supported on the tyre rim inside a hole which is normally used for inserting the inflation valve. Therefore, the impact protection device is completely concealed from sight and is protected from atmospheric agents. Moreover, it is a device which is already available and can be easily changed and replaced.

Another advantage consists in the fact that a TPMS usually has a long electrical autonomy and does not require continuous electrical recharging. In fact, the TPMS are generally powered by means of a non-rechargeable battery, the working life of which may be ensured by the intrinsic low consumption of these systems and so-called standby wake-up configurations (i.e. the system operates only when the vehicle is in movement, etc.). Recently attempts have been made to increase working life or reduce the size of the battery or eliminate the battery entirely by adopting the energy harvesting principle (energy recovery, in this case, from the movement of the wheel - kinematic energy).

A further advantage consists in the fact that it may detect a frontal impact as soon as it occurs, since the front wheel is the first part of the motorcycle which is subject to a change in condition in the event of an impact; the tyre may in fact burst or an increase in pressure inside the motorcycle due to an impact affecting the tyre, or a decrease in the acceleration, may occur.

In addition, owing to the presence of the accelerometers along two axes, direct impacts may be detected together with or in addition to the change in pressure. Moreover, the accelerations may be used to distinguish between an impact and a misuse (travel over a hole, step, etc.), namely a non-impact or non-danger condition. In other words, a variation in acceleration may be monitored in combination or together with a variation in pressure, or even separately instead of monitoring of a variation in pressure, in order to determine a direct knock or impact affecting the tyre, or a non-danger condition.

Basically a proposed solution forming the basis of the present invention is that of modifying a configuration of a logic unit of a TPMS or reprogramming a logic unit of a TPMS, i.e. an already existing device, in order to process impact data of a motorcycle based on detection of the pressure and/or acceleration which is measured inside the tyre.

According to the invention the control unit is programmed in order to analyze data relating to a variation in acceleration, ignoring data relating to a variation in pressure.

The impact data may then be transmitted to a control unit associated with a user who is riding the motorcycle for activation of an airbag if necessary. The control unit located on a person may compare the data from the TPMS with other data detected by the sensors in order to decide whether activation of the airbag is necessary.

Further advantages, characteristic features and modes of use forming the subject of the present invention will become clear from the following detailed description of a number of preferred examples of embodiment thereof, provided by way of a nonlimiting example. It is evident, however, that each example of embodiment may have one or more of the advantages listed above; in any case it is not required that each embodiment should have simultaneously all the advantages listed.

The present invention is described with reference to the following detailed description.

Reference will be made to the figures of the accompanying drawings in which:

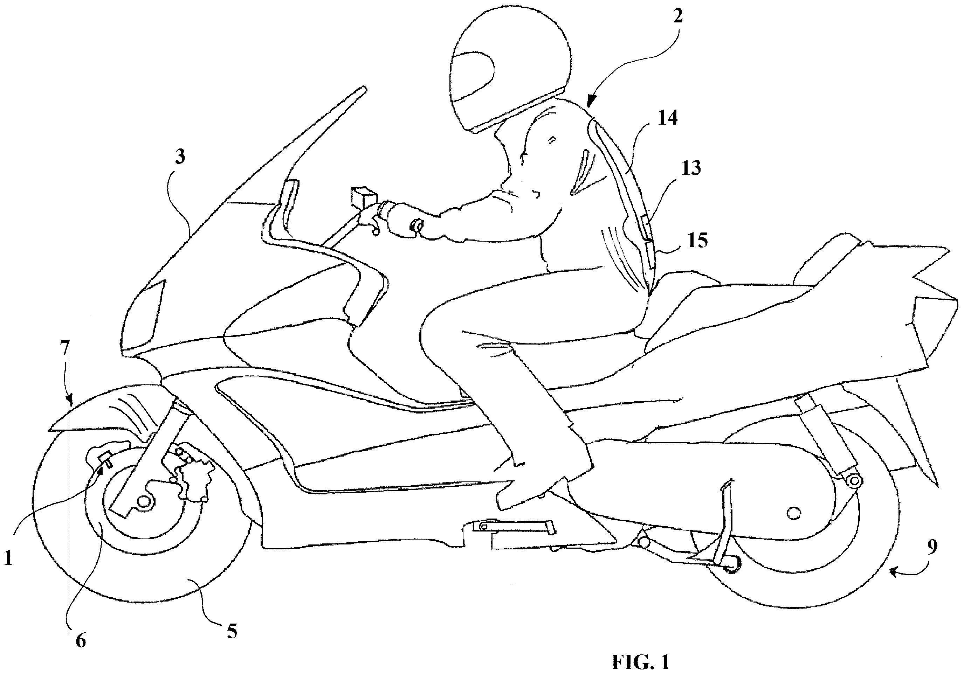

- Figure 1 is a side view showing in diagrammatic form a motorcycle provided with an impact detection device according to the present invention;

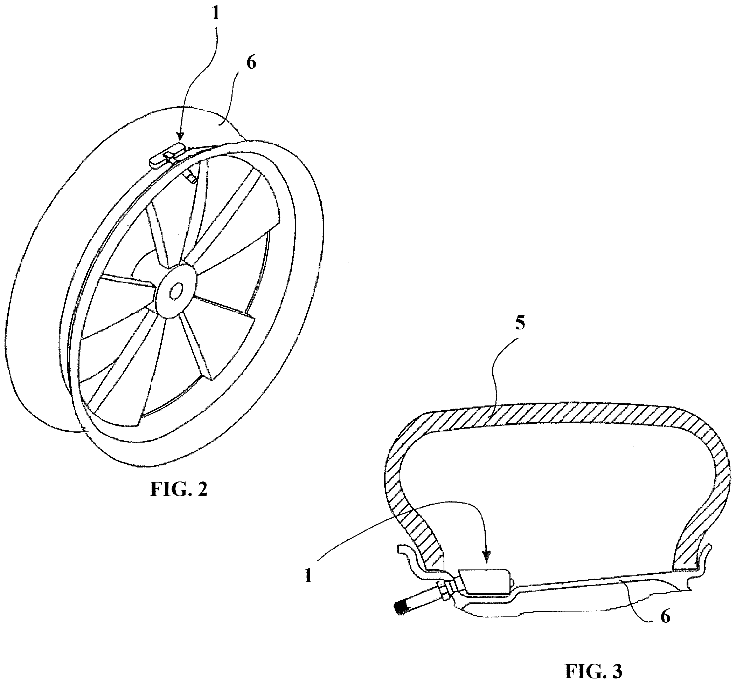

- Figure 2 shows in diagrammatic form a motor vehicle rim provided with an impact detection device according to the present invention;
- Figure 3 is a cross-sectional view of a rim with tyre provided with an impact detection device according to the present invention; and

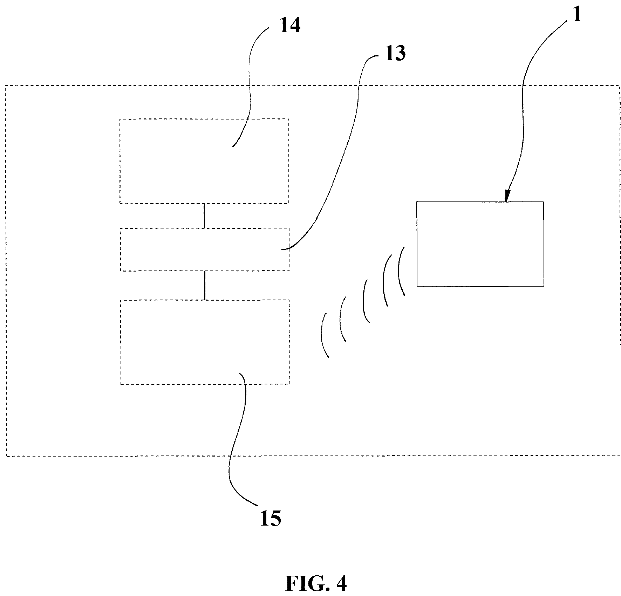

- Figure 4 is a block diagram showing a protection device according to the present invention.

With reference to the figures an impact detection device 1 for detecting a danger condition or an impact affecting a two-wheeled vehicle, such as a motorcycle 3, is shown.

The impact detection device includes a TPMS, namely an integrated tyre pressure control system which is suitably configured to determine from the tyre pressure an impact condition or danger condition for a user 2 who is located on the motorcycle.

In particular, the TPMS includes internally at least one pressure sensor or transducer and acceleration sensors or transducers along two axes, a temperature sensor and a receiver (typically of the low frequency type) and a logic unit able to process signals from the transducers.

The TPMS may be arranged, like the known TPMS, inside a tyre 5 and mounted on the wheel rim. Preferably, the wheel in question will be the front wheel 7 which is usually that which is most exposed to impact. Obviously it is quite possible to arrange suitably configured TPMS on the back wheel 9 of the motorcycle 3, or on both wheels.

The logic unit is able, by means of given mathematical operations, to calculate on the basis of pressure and acceleration values a given condition of the motorcycle related to an impact or a dangerous situation or a combination of information. More particularly, the TPMS may be able to recognize a dangerous situation on the basis of a pressure value inside the tyre, for example when the tyre hits an obstacle, or bursts, or on the basis of acceleration values.

In the embodiment shown the impact detection device 1 forms part of a protection device 5 which includes, in addition to the impact detection device 1, an inflation device 13 and airbag 14, The inflation device 13 and said airbag 13, while being components which are of particular importance for effective operation of said safety device 5, will not be further described in the description below, being components which are already known per se and within the competence of a person skilled in the art, being described for example in patent application WO 2010-067288 A1 in the name of the present Applicant. In particular, the one or more airbags is/are associated with or integrated in an article of clothing for a motorcyclist.

The inflation device 13 is in turn associated with a control unit 15 which is located on a person, namely is associated with a user 2, for example incorporated in the article of clothing. The control unit 15 controls a signal from the impact detection device 1, compares it if necessary with other signals which it receives from other sensors located for example on a person, and, if a danger situation is confirmed, sends an inflation signal. The user 2 is, for example, the driver or rider of the motorcycle 3.

Consequently the TPMS according to the present invention forms part of a device for activating or triggering an airbag.

It may be understood that immediate detection on the front wheel 7 of an impact by the TPMS may be transmitted in a very short period of time - of the order of milliseconds - to the control unit 15 on the person and may immediately inflate the airbag before the user is involved in the impact or falls to the ground.

The subject-matter of the present invention has been described hitherto with reference to preferred embodiments thereof.

## Claims

1. Impact detection device (1) configured to detect a danger condition or impact condition of a two-wheeled vehicle, wherein said impact detection device is or includes a TPMS or "Tyre Pressure Monitoring System", wherein the TPMS is configured to be provided inside a tyre of the two-wheeled vehicle and supported on a tyre rim inside a hole which is normally used for inserting an inflation valve, and wherein the TPMS includes, in a same device, at least one pressure sensor, or pressure transducer, and one or more acceleration transducers or sensors, preferably along two axes, a receiver and a logic unit able to process signals from the transducers, as well as a transmitter able to transmit a processed signal from the logic unit and wherein said logic unit is configured to allow correlation, via mathematical operations, of the acceleration values detected by the respective sensors with impact or danger conditions for a user located on the two-wheeled vehicle, wherein the logic unit of the TPMS is suitably configured to allow the correlation, via mathematical operations, of only acceleration data and ignoring the pressure data in order to establish a danger situation.

2. Impact detection device (1) according to claim 1, wherein no other sensors or transducers, apart from the TPMS, are provided for impact detection.

3. Combination of a wheel of a two-wheeled vehicle and an impact detection device according to claim 1 or claim 2, wherein the TPMS is located inside the tyre of the two-wheeled vehicle.

4. Use of a TPMS or "Tyre Pressure Monitoring System" provided inside a tyre of the two-wheeled vehicle and supported on a tyre rim inside a hole which is normally used for inserting an inflation valve, and wherein the TPMS or "Tyre Pressure Monitoring System" includes acceleration sensors or transducers, said use being intended to process impact data of a motorcycle only on the basis of a variation in acceleration which is measured inside the tyre and identification of an impact and danger situation, and wherein pressure data are ignored in order to establish said danger situation.

5. Two-wheeled vehicle (3) comprising an impact detection device (1) according to any one of claims 1 to 3, said two-wheeled vehicle (3) being a motorcycle.

6. Protection device (5) comprising an impact detection device (1) according to any one of the preceding claims 1 to 3, an inflation device (13) and at least one airbag (14), wherein the inflation device (13) is associated with a control unit (15) configured to control a signal from the impact detection device (1).

7. Method for detecting an impact (1) or a danger condition of a two-wheeled vehicle, wherein said method involves detecting an impact of the two-wheeled vehicle by means of a TPMS or "Tyre Pressure Monitoring System", wherein the TPMS or "Tyre Pressure Monitoring System" is provided inside a tyre of the two-wheeled vehicle and supported on a tyre rim inside a hole which is normally used for inserting an inflation valve, and wherein the TPMS includes one or more acceleration transducers and the TPMS detects at least a variation in acceleration, preferably along two axes, and wherein acceleration signals are processed by a logic unit to detect, on the basis of the acceleration values, impact or danger conditions for a user who is on the two-wheeled vehicle, wherein the TPMS detects a direct impact only on the basis of a variation in acceleration and wherein the TPMS does not measure a variation in pressure to identify impact or danger conditions for a user who is on the two-wheeled vehicle.

8. Method according to claim 7, wherein, apart from the TPMS, no other sensors or transducers are provided for impact detection

9. Method according to any one of claims 7 or 8, wherein said method is part of a method for activating an airbag (14) and wherein a signal is sent from the TPMS to a control unit (15) associated with a user of the two-wheeled vehicle, wherein said control unit (15) sends an inflation signal to an inflation device (13) for the airbag (14), and wherein the control unit (15) processes an airbag inflation and activation signal if a dangerous situation is detected.

10. Method according to any one of claims 7 to 9, wherein said method involves changing a configuration of a logic unit of a TPMS, or reprogramming a logic unit of a TPMS, to process impact data of a motorcycle on the basis of a detected acceleration which is measured inside a tyre.

11. Method according to any one of claims 8 to 11, wherein the TPMS or "Tyre Pressure Monitoring System" includes one or more acceleration transducers and it is envisaged modifying a configuration of a logic unit of the TPMS or reprogramming a logic unit of the TPMS, in order to process impact data of a motorcycle only on the basis of at least one detected variation in acceleration which is measured inside the tyre.

## Patentansprüche

1. Vorrichtung (1) zur Aufprallerkennung, die dafür ausgelegt ist, einen Gefahrzustand oder Aufprallzustand eines zweirädrigen Fahrzeugs zu erkennen, wobei die Vorrichtung zur Aufprallerkennung ein TPMS oder Reifendruck-Überwachungssystem darstellt oder umfasst, wobei das TPMS dafür ausgelegt ist, innerhalb eines Reifens des zweirädrigen Fahrzeugs vorgesehen und an einer Reifenfelge innerhalb eines Lochs gehalten zu werden, das normalerweise zum Einsetzen eines Aufblasventils verwendet wird, und wobei das TPMS in derselben Vorrichtung mindestens einen Drucksensor oder Druckwandler und einen oder mehrere Beschleunigungswandler oder -sensoren, vorzugsweise entlang zweier Achsen, einen Empfänger und eine Logikeinheit, die in der Lage ist, Signale von den Wandlern zu verarbeiten, sowie einen Sender umfasst, der in der Lage ist, ein verarbeitetes Signal von der Logikeinheit aus zu versenden, und wobei die Logikeinheit dafür ausgelegt ist, über mathematische Operationen eine Korrelation der von den jeweiligen Sensoren erfassten Beschleunigungswerte mit Aufprall- oder Gefahrzuständen für einen sich auf dem zweirädrigen Fahrzeug befindlichen Benutzer zu ermöglichen, wobei die Logikeinheit des TPMS zweckmäßigerweise so ausgelegt ist, dass es nur von Beschleunigungsdaten die Korrelation über mathematische Operationen ermöglicht und die Druckdaten ignoriert werden, um eine Gefahrsituation festzustellen.

2. Vorrichtung (1) zur Aufprallerkennung nach Anspruch 1, wobei neben dem TPMS keine weiteren Sensoren oder Wandler zur Aufprallerkennung vorgesehen sind.

3. Kombination aus einem Rad eines zweirädrigen Fahrzeugs und einer Vorrichtung zur Aufprallerkennung nach Anspruch 1 oder Anspruch 2, wobei sich das TPMS innerhalb des Reifens des zweirädrigen Fahrzeugs befindet.

4. Verwendung eines TPMS oder Reifendruck-Überwachungssystems, das innerhalb eines Reifens eines zweirädrigen Fahrzeugs vorgesehen und an einer Reifenfelge innerhalb eines Lochs gehalten ist, das normalerweise zum Einsetzen eines Aufblasventils verwendet wird, und wobei das TPMS oder Reifendruck-Überwachungssystem Beschleunigungssensoren oder Beschleunigungswandler umfasst, wobei die Verwendung dafür gedacht ist, Aufpralldaten eines Motorrads nur auf der Grundlage einer Veränderung der Beschleunigung, die innerhalb des Reifens gemessen wird, und einer Erkennung einer Aufprall- und Gefahrsituation zu verarbeiten, und wobei Druckdaten ignoriert werden, um die Gefahrsituation festzustellen.

5. Zweirädriges Fahrzeug (3) mit einer Vorrichtung (1) zur Aufprallerkennung nach einem der Ansprüche 1 bis 3, wobei es sich bei dem zweirädrigen Fahrzeug (3) um ein Motorrad handelt.

6. Schutzvorrichtung (5) mit einer Vorrichtung (1) zur Aufprallerkennung nach einem der vorhergehenden Ansprüche 1 bis 3, einer Aufblasvorrichtung (13) und mindestens einem Airbag (14), wobei die Aufblasvorrichtung (13) einer Steuereinheit (15) zugeordnet ist, die dafür ausgelegt ist, ein Signal von der Vorrichtung (1) zur Aufprallerkennung zu steuern.

7. Verfahren zur Erkennung eines Aufpralls (1) oder eines Gefahrzustands eines zweirädrigen Fahrzeugs, wobei das Verfahren die Erkennung eines Aufpralls des zweirädrigen Fahrzeugs mittels eines TPMS oder Reifendruck-Überwachungssystems beinhaltet, wobei das TPMS oder Reifendruck-Überwachungssystem innerhalb eines Reifens des zweirädrigen Fahrzeugs vorgesehen und an einer Reifenfelge innerhalb eines Lochs gehalten ist, das normalerweise zum Einsetzen eines Aufblasventils verwendet wird, und wobei das TPMS einen oder mehrere Beschleunigungswandler umfasst und das TPMS mindestens eine Veränderung der Beschleunigung vorzugsweise entlang zweier Achsen erkennt, und wobei von einer Logikeinheit Beschleunigungssignale verarbeitet werden, um auf der Grundlage der Beschleunigungswerte Aufprall- oder Gefahrzustände für einen Benutzer zu erkennen, der sich auf dem zweirädrigen Fahrzeug befindet, wobei das TPMS einen direkten Aufprall nur auf der Grundlage einer Veränderung der Beschleunigung erkennt und wobei das TPMS keine Veränderung des Drucks misst, um Aufprall- oder Gefahrzustände für einen Benutzer zu erkennen, der sich auf dem zweirädrigen Fahrzeug befindet.

8. Verfahren nach Anspruch 7, wobei neben dem TPMS keine weiteren Sensoren oder Wandler zur Aufprallerkennung vorgesehen sind.

9. Verfahren nach einem der Ansprüche 7 oder 8, wobei das Verfahren Teil eines Verfahrens zum Aktivieren eines Airbags (14) ist und wobei ein Signal vom TPMS an eine Steuereinheit (15) gesendet wird, die einem Benutzer des zweirädrigen Fahrzeugs zugeordnet ist, wobei die Steuereinheit (15) ein Aufblassignal an eine Aufblasvorrichtung (13) für den Airbag (14) sendet, und wobei die Steuereinheit (15) ein Signal zum Aktivieren und Aufblasen eines Airbags verarbeitet, wenn eine gefährliche Situation erkannt wird.

10. Verfahren nach einem der Ansprüche 7 bis 9, wobei das Verfahren ein Abändern einer Konfiguration einer Logikeinheit des TPMS oder eine Umprogrammierung einer Logikeinheit des TPMS beinhaltet, um Aufpralldaten eines Motorrads auf der Grundlage einer erfassten Beschleunigung zu verarbeiten, die innerhalb eines Reifens gemessen wird.

11. Verfahren nach einem der Ansprüche 8 bis 11, wobei das TPMS oder Reifendruck-Überwachungssystem einen oder mehrere Beschleunigungswandler umfasst und dafür vorgesehen ist, eine Konfiguration einer Logikeinheit des TPMS zu modifizieren oder eine Logikeinheit des TPMS umzuprogrammieren, um Aufpralldaten eines Motorrad nur auf der Grundlage von zumindest einer erfassten Veränderung der Beschleunigung zu verarbeiten, die innerhalb des Reifens gemessen wird.

## Revendications

1. Dispositif de détection d'impact (1) configuré pour détecter une condition de danger ou une condition d'impact d'un véhicule à deux roues, dans lequel ledit dispositif de détection d'impact est ou comprend un TPMS ou « Système de surveillance de pression de pneu », dans lequel le TPMS est configuré pour être prévu à l'intérieur d'un pneu du véhicule à deux roues et supporté sur une jante de pneu à l'intérieur d'un trou qui est normalement utilisé pour insérer une valve de gonflage, et dans lequel le TPMS comprend, dans un même dispositif, au moins un capteur de pression ou transducteur de pression et un ou plusieurs capteurs ou transducteurs d'accélération, de préférence le long de deux axes, un récepteur et une unité logique pouvant traiter des signaux provenant des transducteurs, ainsi qu'un émetteur pouvant transmettre un signal traité de l'unité logique et dans lequel ladite unité logique est configurée pour permettre la corrélation, via des opérations mathématiques, des valeurs d'accélération détectées par les capteurs respectifs avec des conditions d'impact ou de danger pour un utilisateur positionné sur le véhicule à deux roues, dans lequel l'unité logique du TPMS est configurée, de manière appropriée, pour permettre la corrélation, via des opérations mathématiques, uniquement des données d'accélération et ignorer les données de pression afin d'établir une situation de danger.

2. Dispositif de détection d'impact (1) selon la revendication 1, dans lequel aucun autre capteur ni transducteur, excepté le TPMS, n'est prévu pour la détection d'impact.

3. Combinaison composée d'une roue d'un véhicule à deux roues et d'un dispositif de détection d'impact selon la revendication 1 ou la revendication 2, dans laquelle le TPMS est positionné à l'intérieur du pneu du véhicule à deux roues.

4. Utilisation d'un TPMS ou « Système de surveillance de pression de pneu » prévu à l'intérieur d'un pneu du véhicule à deux roues et supporté sur une jante de pneu à l'intérieur d'un trou qui est normalement utilisé pour insérer une valve de gonflage, et dans laquelle le TPMS ou « Système de surveillance de pression de pneu » comprend des capteurs ou transducteurs d'accélération, ladite utilisation étant prévue pour traiter des données d'impact d'une motocyclette uniquement sur la base d'une variation d'accélération qui est mesurée à l'intérieur du pneu et l'identification d'une situation d'impact et de danger, et dans lequel les données de pression sont ignorées afin d'établir ladite situation de danger.

5. Véhicule à deux roues (3) comprenant un dispositif de détection d'impact (1) selon l'une quelconque des revendications 1 à 3, ledit véhicule à deux roues (3) étant une motocyclette.

6. Dispositif de protection (5) comprenant un dispositif de détection d'impact (1) selon l'une quelconque des revendications 1 à 3, un dispositif de gonflage (13) et au moins un coussin de sécurité gonflable (14), dans lequel le dispositif de gonflage (13) est associé à une unité de commande (15) configurée pour contrôler un signal du dispositif de détection d'impact (1).

7. Procédé pour détecter un impact (1) ou une condition de danger d'un véhicule à deux roues, dans lequel ledit procédé implique l'étape consistant à détecter un impact du véhicule à deux roues au moyen d'un TPMS ou « Système de surveillance de pression de pneu », dans lequel le TPMS ou « Système de surveillance de pression de pneu » est prévu à l'intérieur d'un pneu du véhicule à deux roues et supporté sur une jante de pneu à l'intérieur d'un trou qui est normalement utilisé pour insérer une valve de gonflage, et dans lequel le TPMS comprend un ou plusieurs transducteurs d'accélération et le TPMS détecte au moins une variation d'accélération, de préférence le long de deux axes, et dans lequel les signaux d'accélération sont traités par une unité logique pour détecter, sur la base des valeurs d'accélération, les conditions d'impact ou de danger pour un utilisateur qui est sur le véhicule à deux roues, dans lequel le TPMS détecte un impact direct uniquement sur la base d'une variation d'accélération et dans lequel le TPMS ne mesure pas de variation de pression pour identifier les conditions d'impact ou de danger pour un utilisateur qui est sur le véhicule à deux roues.

8. Procédé selon la revendication 7, dans lequel, excepté le TPMS, aucun autre capteur ni transducteur n'est prévu pour la détection d'impact.

9. Procédé selon l'une quelconque des revendications 7 ou 8, dans lequel ledit procédé fait partie d'un procédé pour activer un coussin de sécurité gonflable (14) et dans lequel un signal est envoyé du TPMS à une unité de commande (15) associée à un utilisateur du véhicule à deux roues, dans lequel ladite unité de commande (15) envoie un signal de gonflage à un dispositif de gonflage (13) pour le coussin de sécurité gonflable (14), et dans lequel l'unité de commande (15) traite un signal de gonflage et d'activation de coussin de sécurité gonflable si une situation dangereuse est détectée.

10. Procédé selon l'une quelconque des revendications 7 à 9, dans lequel ledit procédé implique l'étape consistant à modifier une configuration d'une unité logique d'un TPMS, ou reprogrammer une unité logique d'un TPMS, pour traiter les données d'impact d'une motocyclette sur la base d'une accélération détectée qui est mesurée à l'intérieur d'un pneu.

11. Procédé selon l'une quelconque des revendications 8 à 11, dans lequel le TPMS ou « Système de surveillance de pression de pneu » comprend un ou plusieurs transducteurs d'accélération et on envisage de modifier une configuration d'une unité logique du TPMS ou de reprogrammer une unité logique du TPMS, afin de traiter les données d'impact d'une motocyclette uniquement sur la base d'au moins une variation d'accélération détectée qui est mesurée à l'intérieur du pneu.
